**Europäisches Patentamt**

**European Patent Office**

**Office européen des brevets**

(19)

(11) Veröffentlichungsnummer: **0 051 113**
**B1**

(12) **EUROPÄISCHE PATENTSCHRIFT**

(45) Veröffentlichungstag der Patentschrift:
11.07.84

(21) Anmeldenummer: 81106174.6

(22) Anmeldetag: 06.08.81

(51) Int. Cl.³: **B 62 D 53/08**

(54) **Lagerung für eine Sattelkupplung.**

(30) Priorität: 30.10.80 DE 3040925

(43) Veröffentlichungstag der Anmeldung:
12.05.82 Patentblatt 82/19

(45) Bekanntmachung des Hinweises auf die Patenterteilung:
11.07.84 Patentblatt 84/28

(84) Benannte Vertragsstaaten:
AT BE CH DE FR GB IT LI LU NL SE

(56) Entgegenhaltungen:
CH - A - 536 731
DE - B - 1 205 394
US - A - 2 289 079

(73) Patentinhaber: ROCKINGER Spezialfabrik für
Anhängerkupplungen GmbH & Co.,
Orleansstrasse 12 Postfach 80 14 44,
D-8000 München 80 (DE)

(72) Erfinder: Nauwerck, Bertram, Hummelweg 22,
D-8039 Puchheim-Bhf (DE)
Erfinder: Raaber, Alfons, Riemerschmidstrasse 9,
D-8000 München 45 (DE)

(74) Vertreter: Weickmann, Heinrich, Dipl.-Ing. et al,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22,
D-8000 München 86 (DE)

**Beschreibung**

Die Erfindung betrifft eine Lagerung für eine Sattelkupplung, bei der an der Unterseite einer Kupplungsplatte symmetrisch zu beiden Seiten der Längsachse eines Einführungsschlitzes je eine, mit einer elastischen Auskleidung versehene Tasche angeordnet ist, in welcher sich ein Gehäusekopf eines Lagerbockes abstützt, wobei die Verankerung des Gehäusekopfes in der Tasche jeweils durch zumindest einen eine horizontale Anlagefläche des Gahäusekopfes untergreifenden, mit der Kupplungsplatte fest verbundenen, Riegel gesichert ist und wobei dieser Riegel unter Vermittlung eines elastischen Stützkörpers an den horizontalen Anlageflächen anliegt.

Eine solche Lagerung ist aus der CH-A Nr. 536731 bekannt.

Bei der bekannten Ausführungsform ist der Gehäusekopf als durchgehend offener Kasten ausgebildet, wobei dieser Kasten von einem Riegel durchsetzt wird.

Durch die Öffnung des Gehäusekopfes tritt eine Schwächung des Gehäusekopfes ein, welche durch entsprechen stärkere Bemessung der die Öffnung begrenzenden Teile kompensiert werden muss.

Der Erfindung liegt die Aufgabe zugrunde, eine Lagerung der bekannten Art so auszubilden, dass Strukturschwächungen der Gehäuseköpfe durch die riegelaufnehmenden Öffnungen vermieden werden.

Zur Lösung dieser Aufgabe wird erfindungsgemäss vorgeschlagen, dass die Gehäuseköpfe, in Längsrichtung des Einführungsschlitzes betrachtet, T-förmig sind, und dass wiederum in derselben Richtung betrachtet, jedem Gehäusekopf zu beiden Seiten je ein Riegel zugeordnet ist, welcher unter Vermitlung jeweils eines elastischen Stützkörpers an der Unterseite des jeweiligen T-Querschenkelendes anliegt.

Weitere Merkmale der Erfindung ergeben sich aus den Unteransprüchen.

Mit der Massnahme des Anspruchs 2 wird vor allem darauf abgesehen, metallische Berührungen relativ zueinander bewegter Teile und dadurch bedingte Geräusche und Abnutzungen zu vermeiden.

Die Massnahme des Anspruchs 3 zielt in Weiterbildung der Erfindung darauf ab, eine geschlossene Struktur des Gehäusekopfes zu gewinnen und damit auf eine hohe mechanische Festigkeit.

Die Massnahme des Anspruchs 4 zielt auf eine einfache Ausbildung der Verbindungsmittel zwischen den Riegeln und der Kupplungsplatte ab. Diese einfache Art der Verbindungsmittel ergibt sich insbesondere auch aus den Massnahmen der Ansprüche 5, 6 und 7, wobei besonders bemerkenswert ist, dass die Bohrungen in den Lagerflanschen keiner Feinbearbeitung bedürfen und ggf. sogar beim Guss gewonnen werden können, ohne dass es überhaupt einer Nachbearbeitung bedarf.

Die Massnahme des Anspruchs 8 zielt darauf ab, eine geringe Bauhöhe bei entsprechendem Wunsch verwirklichen zu können und die Kanten und Ränder der elastischen Auskleidung sowie der Stützkörper so anzuordnen, dass sie sich gegenseitig stützen und möglichst geringer mechanischer Belastung unterworfen sind.

Die Massnahme des Anspruchs 9 zielt ab auf eine begrenzt elastische Nickbewegung der Kupplungsplatte um die Querachse unter gleichzeitiger Schonung der elastischen Auskleidung und des elastischen Stützkörpers.

Die Massnahme des Anspruchs 10 will die Riegel in der Weise gestalten, dass die Befestigungsmittel an der Kupplungsplatte möglichst wenig gegenüber von deren Hauptebene nach unten vorragen und dennoch eine hochfeste Verbindung zwischen der Kupplungsplatte und den Gehäuseköpfen zustande kommt.

Die beiliegenden Figuren erläutern die Erfindung anhand eines Ausführungsbeispiels. Es stellen dar:

Fig. 1 eine Draufsicht auf eine Kupplungsplatte mit erfindungsgemässer Lagerung;

Fig. 2 einen Schnitt nach Linie II-II der Fig. 1;

Fig. 3 einen Schnitt nach Linie III-III der Fig. 2, und

Fig. 4 einen Schnitt nach Linie IV-IV der Fig. 2.

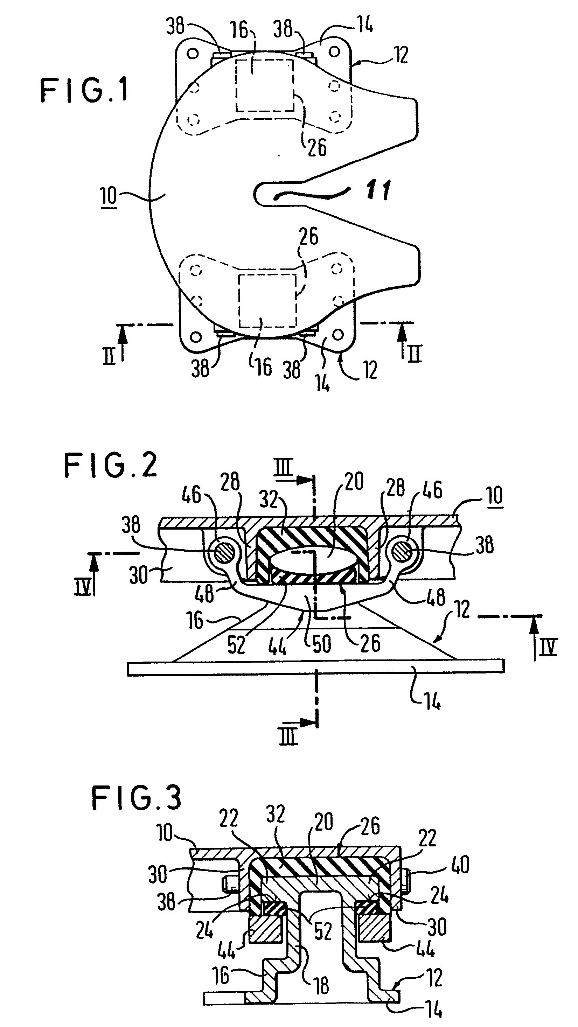

In Fig. 1 ist eine Kupplungsplatte mit 10 bezeichnet. Diese Kupplungsplatte ist, wie aus den Fig. 1, 2 und 3 ersichtlich, durch Lagerböcke 12 getragen, welche auf den Rahmen eines Sattelschlepperzugfahrzeugs anzubringen sind und zu diesem Zweck mit Befestigungsflanschen 14 ausgerüstet sind. Über den Befestigungsflanschen 14 erheben sich Gehäuseköpfe 16. Diese Gehäuseköpfe 16 sind als Hohlkörper ausgebildet, welche lediglich nach unten offen sind. Die Gehäuseköpfe 16 sind in Längsrichtung des Einführungsschlitzes 11 der Fig. 1 betrachtet, T-förmig mit einem Mittelschenkel 18 und einem Querschenkel 20. Der Querschenkel 20 hat, wie aus Fig. 2 ersichtlich, an seinen Enden ellipsenförmigen Querschnitt. Die Endstücke 22 des Querschenkels 20 weisen an ihrer Unterseite Anlageflächen 24 auf.

Die Kupplungsplatte 10 weist an ihrer Unterseite Taschen 26 auf, welche durch Querwände 28 und Längswände 30 begrenzt sind. In die Taschen 26 sind elastische, nach unten offene, hohle Auskleidungen 32 eingesetzt. Die Querschenkel 20 der T-förmigen Gehäuseköpfe 16 finden innerhalb des Hohlraums der jeweiligen Auskleidung 32 Platz, wobei die Querschenkel 20 die Hohlräume der Stützkörper 32, in horizontalem Querschnitt gesehen, im wesentlichen vollständig ausfüllen.

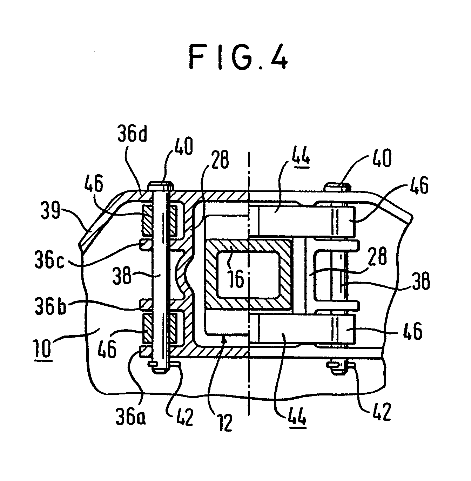

An der Kupplungsplatte 10 sind, wie aus Fig. 4 ersichtlich, angrenzend an den Querwänden 28 der Taschen 26 Lagerflansche 36a bis 36d angeformt, wobei der Lagerflansch 36d Teil einer Umrandung 39 an der Unterseite der Kupplungsplatte 10 ist. Die Lagerflansche 36a bis 36d sind von Löchern durchsetzt, welche Steckbolzen 38 aufnehmen. Die Löcher in den Flanschen 36a bis 36d brauchen nicht bearbeitet zu sein. Jeweils ein Ende der Steckbolzen 38 weist einen Steckbolzenkopf 40 auf; das jeweils andere Ende der Steckbolzen 38 ist durch einen Splint 42 in axialer Richtung gesichert. Durch die Steckbolzen 38 sind an der Unterseite der Kupplungsplatte 10 Riegel 44 befestigt, die zum Zwecke der Befestigung Durchsteckaugen 46 aufweisen. Die Durchsteckaugen 46 sind an den Längsschenkeln oder hier im Hinblick auf die spezielle Gestaltung der Fig. 2, besser gesagt, Aussenschenkel 48, der U-förmig gestalteten Riegel 44 angebracht, während die Querschenkel 50 der Riegel 44 Biegeversteifungen aufweisen.

Wie aus Fig. 2 ersichtlich, liegen die Querschenkel 50 der Riegel 46 unter Vermittlung von elastischen Stützkörpern 52 an den Anlageflächen 24 der Querschenkel 20 an. Dabei befinden sich die Stützkörper 52 innerhalb des Hohlraums, welcher durch die Taschen 32 begrenzt ist.

R: BE8 J: 40-2 PTF40-2a 51113

Die elastischen Auskleidungen 32 und die Stützkörper 52 können aus Gummi bestehen. Die Auskleidung 32 und die Stützkörper 52 können unter Vorspannung aneinander anliegen, in welchem Falle zur Montage eine Vorrichtung erfoderlich ist, welche die Kupplungsplatte 10 unter Zusammenquetschung der Auskleidung 32 nach unten und die Riegel 44 unter Zusammenquetschung der Stützkörper 52 nach oben presst, so lange bis die Steckbolzen 38 durch die Löcher der Flansche 36a bis 36d und durch die Durchsteckaugen 46 hindurch gesteckt werden können.

Durch die soweit beschriebenen Massnahmen ist die Kupplungsplatte 10 auf den Lagerböcken 12 und damit auf dem Rahmen des Sattelschlepperzufahrzeugs befestigt, wobei eine Nickbewegung um die in Fig. 2 senkrecht zur Zeichenebene stehende Querachse des Querschenkels 20 stattfinden kann und metallische Berührungen zwischen der Kupplungsplatte 10 und den Lagerböcken 12 vollständig ausgeschlossen sind; in letzterer Hinsicht ist zu beachten, dass die Riegel 44, wie in Fig. 3 dargestellt, seitlich Abstand von dem Mittelschenkel 18 haben. Dieser Abstand lässt sich durch entsprechende Abstimmung der Breite der Durchsteckaugen 46 auf die Abstände der Lagerflansche 36a, 36b, 36c und 36d einhalten.

Besonders zu beachten ist auch, dass an der Kupplungsplatte 10 keine spanabhebende Bearbeitung vorgenommen werden muss, um die Kupplungsplatte 10 an den Lagerböcken 12 zu befestigen. Die Löcher in den Flanschen 36a, 36b, 36c, 36d können schon vom Guss her vorhanden sein. Bereitet dies Schwierigkeiten, so können diese Löcher ohne Feinbearbeitung gebohrt werden.

## Patentansprüche

1. Lagerung für eine Sattelkupplung, bei der an der Unterseite einer Kupplungsplatte (10) symmetrisch zu beiden Seiten der Längsachse eines Einführungsschlitzes (11) je eine, mit einer elastischen Auskleidung (32) versehene Tasche (26) angeordnet ist, in welcher sich ein Gehäusekopf (16) eines Lagerbockes (12) abstützt, wobei die Verankerung des Gehäusekopfes in der Tasche jeweils durch zumindest einen eine horizontale Anlagefläche (24) des Gehäusekopfes untergreifenden, mit der Kupplungsplatte fest verbundenen, Riegel (44) gesichert ist und wobei dieser Riegel unter Vermittlung eines elastischen Stützkörpers (52) an den horizontalen Anlageflächen anliegt, dadurch gekennzeichnet, dass die Gehäuseköpfe (16), in Längsrichtung des Einführungsschlitzes (11) betrachtet, T-förmig sind, und dass wiederum in derselben Richtung betrachtet, jedem Gehäusekopf (16) zu beiden Seiten je ein Riegel (44) zugeordnet ist, welcher unter Vermittlung jeweils eines elastischen Stützkörpers (52) an der Unterseite (24) des jeweiligen T-Querschenkelendes (22) anliegt.

2. Lagerung nach Anspruch 1, dadurch gekennzeichnet, dass die elastische Auskleidung (32) als ein nach unten offener Hohlkörper ausgebildet ist, derart, dass die Seiten- und Endflächen des jeweiligen T-Querschenkels an der Taschenwandung (26, 30) allseits unter Vermittlung der elastichen Auskleidung (32) anliegen, wobei die Abmessungen derart gewählt sind, dass die Riegel (44) zumindest im unbelasteten Zustand ausser Berührung mit dem T-Mittelschenkel (18) stehen.

3. Lagerung nach einem der Ansprüche 1 oder 2, dadurch gekennzeichnet, dass der Gehäusekopf (16) als hohler, im Bereich des T-Mittelschenkels (18) und des T-Querschenkels (20) allseits geschlossener und lediglich nach unten offener Hohlkörper ausgebildet ist.

4. Lagerung nach einem der Ansprüche 1 bis 3, dadurch gekennzeichnet, dass die ein und demselben Gehäusekopf (16) zugeordneten Riegel (44) durch gemeinsame Befestigungsmittel (38) an der Kupplungsplatte (10) befestigt sind.

5. Lagerung nach Anspruch 4, dadurch gekennzeichnet, dass die gemeinsamen Befestigungsmittel (38) jeweils einen Steckbolzen (38) an den beiden Enden der Riegel (44) umfassen, wobei diese Steckbolzen (38) an der Kupplungsplatte (10) gelagert sind und die Riegel (44) mit Durchsteckaugen (46) an ihren Enden zur Aufnahme der Steckbolzen (38) ausgeführt sind.

6. Lagerung nach Anspruch 5, dadurch gekennzeichnet, dass an der Unterseite der Kupplungsplatte (10) angrenzend an und verbunden mit in Längsrichtung des Einführungsschlitzes (11) beabstandeten Begrenzungswänden (28) der jeweiligen Tasche (26) in horizontaler Querrichtung durchbohrte Lagerflansche (36a-36d) für den Steckbolzen (38) angeordnet sind, wobei jeweils einer der Lagerflansche (36a-36d) gegebenenfalls Teil eines abwärts gerichteten Umschliessungsflansches (39) der Kupplungsplatte (10) ist, und wobei der Abstand der Lagerflansche (36c-36d) in horizontaler Querrichtung jeweils annähernd der Breite der Durchsteckaugen (46) der Riegel (44) entspricht.

7. Lagerung nach einem der Ansprüche 5 oder 6, dadurch gekennzeichnet, dass die Steckbolzen (38) jeweils an einem Ende einen Steckbolzenkopf (40) und am anderen Ende eine Sicherung, z.B. eine Splintsicherung (42) od. dgl. aufweisen.

8. Lagerung nach einem der Ansprüche 1 bis 7, dadurch gekennzeichnet, dass die elastischen Stützkörper (52) innerhalb der elastischen Auskleidung (32) Platz finden.

9. Lagerung nach einem der Ansprüche 1 bis 8, dadurch gekennzeichnet, dass die T-Querschenkel (20) im Bereich ihrer Endabschnitte (22) annähernd elliptischen Querschnitt besitzen.

10. Lagerung nach einem der Ansprüche 1 bis 9, dadurch gekennzeichnet, dass die Riegel (44) im wesentlichen U-förmig ausgebildet sind und mit den Durchsteckaugen (46) an den freien Aussenschenkelenden (48) und mit einer die Biegesteifigkeit um die Querachse erhöhenden Versteifung im Bereich ihres Mittelschenkels (50) versehen sind.

11. Lagerung nach einem der Ansprüche 1 bis 10, dadurch gekennzeichnet, dass die elastischen Stützkörper (52) zusammenhängend, vorzugsweise einstückig zusammenhängend mit der elastischen Auskleidung (32) ausgebildet sind.

## Claims

1. Mounting for a semi-trailer coupling, in which on the underside of a coupling plate (10), symmetrically to both sides of the longitudinal axis of an entry slot (11), on each side a pocket (26) provided with an elastic lining (32) is arranged in which there is supported a housing head (16) of a bearing block (12), the anchoring of the housing head in the pocket being in each case secured by at least one tie bolt (44) firmly connected with the coupling plate and engaging beneath a horizontal abutment face (24) of the housing head, this tie bolt resting through the intermediary of an elastic support body (52) on the horizontal abutment faces, characterised in that the housing heads (16), considered in the longitudinal direction of the entry slot (11), are T-shaped and that, again considered in the same direction, a tie bolt (44) is allocated on both sides to each housing head (16), which bolt rests, through the intermediary of an elastic support body (52) in each case, on the underside (24) of the respective T-cross-bar end (22).

2. Mounting according to Claim 1, characterised in that the elastic lining (32) is formed as a downwardly open hollow body in such a way that the lateral and end faces of the respective T-cross-bar rest on the pocket wall (26, 30) on all sides through the intermediary of the elastic lining (32), the dimensions being selected so that the tie bolts (44), at least in the unloaded condition, are out of contact with the T-centre-bar (18).

3. Mounting according to one of Claims 1 or 2, characterised in that the housing head (16) is made as a hollow body closed on all sides in the region of the T-centre-bar (18) and the T-cross-bar (20) and open only downwards.

4. Mounting according to one of Claims 1 to 3, characterised in that the tie bolts (44) allocated to one and the same housing head (16) are secured by common securing means (38) on the coupling plate (10).

5. Mounting according to Claim 4, characterised in that the common securing means (38) comprise a push-in bolt (38) on each of the two ends of the tie bolts (44), these push-in bolts (38) being mounted on the coupling plate (10) and the tie bolts (44) being made with push-through eyes (46) at their ends to receive the push-in bolts (38).

6. Mounting according to Claim 5, characterised in that mounting flanges (36a-36d), drilled through in the horizontal transverse direction, for the push-in bolts (38) are arranged on the underside of the coupling plate (10) adjoining and connected with defining walls (28), spaced in the longitudinal direction of the entry slot, of the respective pocket (26), while one in each case of the mountig flanges (36a-36d) may be part of a downwardly directed enclosing flange (39) of the coupling plates (10) and the distance between the mounting flanges (36c-36d) in the horizontal transverse direction corresponds in each case approximately to the width of the push-through eyes (46) of the tie bolts (44).

7. Mounting according to one of Claims 5 or 6, characterised in that the push-in bolts (38) each comprise a push-in bolt head (40) at the one end and a securing device, for example a split pin securing device (42) or the like, at the other end.

8. Mounting according to one of Claims 1 to 7, characterised in that the elastic support bodies (52) are accommodated within the elastic lining (32).

9. Mounting according to one of Claims 1 to 8, characterised in that the T-cross-bars (20) possess approximately elliptical cross-section in the region of their end sections (22).

10. Mounting according to one of Claims 1 to 9, characterised in that the tie bolts (44) are made substantially U-shaped and are provided with the push-through eyes (46) at the free ends (48) of the outer legs and with a stiffening, increasing the stiffness to bending about the transverse axis, in the region of their middle member (50).

11. Mounting according to one of Claims 1 to 10, characterised in that the elastic support bodies (52) are made connected, preferably integrally connected, with the elastic lining (32).

## Revendications

1. Articulation pour un attelage à sellette dans laquelle, contre la face inférieure d'une plaque d'attelage (10), sont disposées, symétriquement des deux côtés de l'axe longitudinal d'une fente d'engagement (11), deux poches (26) munies d'un revêtement élastique (32) et dans chacune desquelles prend appui une tête de carter (16) d'un support de portée (12), l'ancrage de la tête de carter dans la poche étant assuré, pour chaque poche, par au moins un verrou (44) engagé sous une surface d'appui horizontale (24) de la tête de carter et qui est reliée solidement à la plaque d'attelage, ce verrou s'appuyant, par l'intermédiaire d'un corps de portée élastique (52) contre les surfaces de portée horizontales, caractérisée en ce que les têtes de carter (16) sont en forme de T, considérées dans la direction longitudinale de la fente d'engagement (11) et en ce que, considéré à nouveau dans le même sens, à chaque tête de carter (16) est associé, sur chaque côté, un verrou (44) qui est appuyé, par l'intermédiaire d'un corps de portée élastique (52) contre la face inférieure (24) de l'extrémité (22) correspondante de la branche transversale du T.

2. Articulation selon la revendication 1, caractérisée en ce que le revêtement élastique (32) est réalisé sous la forme d'un corps creux ouvert vers le bas, de manière que les surfaces latérales et terminales de la barre transversale correspondante du T soient appuyées de tous côtés contre la paroi des poches (26, 30) par l'intermédiaire du revêtement élastique (32), les dimensions étant choisies de manière que les verrous (44) soient sans contact avec la branche médiane (18) du T, du moins dans l'état déchargé.

3. Articulation selon l'une des revendications 1 ou 2, caractérisée en ce que la tête de carter (16) est constituée par un corps creux, fermé de tous côtés dans la région de la branche médiane (18) du T et de la barre transversale (20) du T et uniquement ouvert vers le bas.

4. Articulation selon l'une des revendications 1 à 3, caractérisée en ce que les verrous (44) associés à une seule et même tête de carter (16) sont fixés à la plaque d'attelage (10) par des moyens de fixation communs (38).

5. Articulation selon la revendication 4, caractérisée en ce que les moyens de fixation communs (38) comprennent une broche (38) à chacune des deux extrémités des verrous (44), ces broches (38) étant montées sur la plaque d'attelage (10) et les verrous (44) étant munis d'oreilles de passage (46) à leurs extrémités pour recevoir les broches (38).

6. Articulation selon la revendication 5, caractérisée en ce que des flasques d'articulation (36a, 36d) pour le montage des broches (38), percés dans la direction horizontale, sont disposés adjacents à la face inférieure de la plaque d'attelage (10) et reliés aux parois limites (28) de la poche (26) correspondante, qui sont situées à une certaine distance de la fente d'engagement dans la direction longitudinale, l'un des flasques d'articulation (36a, 36d) faisant éventuellement partie d'un flasque enveloppant (39) de la plaque d'attelage (10) qui est dirigé vers le bas et l'écartement des flasques d'articulation (36c, 36d) dans la direction transversale horizontale correspondant approximativement à la largeur des oreilles de passage (46) des verrous (44).

7. Articulation selon l'une des revendications 5 ou 6, caractérisée en ce que les broches (38) présentent à une première extrémité une tête de broche (40) et, à l'autre extrémité, un arrêtoir, par exemple une goupille fendue (42) ou équivalent.

8. Articulation selon l'une des revendications 1 à 7, caractérisée en ce que les corps de portée élastiques (52) trouvent place à l'intérieur du revêtement élastique (32).

9. Articulation selon l'une des revendications 1 à 8, caractérisée en ce que les branches transversales (20) du T possèdent une section approximativement elliptique dans la région de leurs segments terminaux (22).

10. Articulation selon l'une des revendications 1 à 9, caractérisée en ce que les verrous (44) présentent une forme sensiblement en U et sont munis d'oreilles de passage (46) aux extrémités libres (48) des branches extérieures et d'un renforcement qui accroît la rigidité en flexion autour de l'axe transversal dans la région de leur branche centrale (50).

11. Articulation selon l'une des revendications 1 à 10, caractérisée en ce que les corps de portée élastiques (52) sont rattachés, de préférence en une seule pièce, au revêtement élastique (32).

FIG.1

FIG.2

FIG.3

# FIG.4